# DEMANDE DE BREVET EUROPEEN

(11) **EP 1 283 592 A1**
(43) Date de publication de la demande: **12.02.2003**
(21) Numéro de dépôt: 02077890.8
(22) Date de dépôt: 17.07.2002
(51) Int. Cl.: H02N 2/12

(54) **Moteur piézo-électrique**

(30) Priorité: 09.08.2001 EP 01203017
(71) Demandeur: ASULAB S.A., 2074 Marin (CH)
(72) Inventeur: Dinger, Rudolf, 2024 Saint-Aubin (CH)
(74) Mandataire: Ravenel, Thierry Gérard Louis

(57) **Abrégé**

La présente invention concerne un moteur piézo-électrique du type comprenant :
- un stator (2);
- un rotor (20) susceptible de se déplacer en rotation dans un plan (Pdm) dit plan de déplacement moyen normal à l'axe géométrique de rotation (X1) sur lequel le rotor (20) est centré;
- des moyens de couplage (8) pour l'entraînement du rotor (20) disposés entre le stator (2) et ledit rotor (20);
- des moyens piézo-électriques (12) susceptibles d'être excités électriquement pour imprimer aux moyens de couplage (8) un mouvement vibratoire;
- des moyens de transmission (40) aptes à transmettre le mouvement vibratoire des moyens de couplage (8) au rotor (20) afin d'entraîner ledit rotor (20) en rotation autour de son axe (X1), et
- des moyens de maintien (44) pour appliquer le rotor (20) sur les moyens de couplage (8),
caractérisé en ce que les moyens de couplage (8) sont disposés librement autour de l'axe géométrique de rotation (X1) sur lequel ils sont centrés, et en ce que les moyens de couplage (8) repose sur le stator (2) par l'intermédiaire de moyens d'appui (10) conformés pour transformer le mouvement vibratoire des points (P) dans la région de contact entre les moyens de couplage (8) et le rotor (20) en un mouvement sensiblement elliptique avant ou arrière, essentiellement perpendiculairement au plan du rotor (20).

## Description

La présente invention concerne un moteur piézo-électrique.

Un moteur piézo-électrique est déjà connu par la demande de brevet européen No 0 537 446 au nom de la Demanderesse. Ce moteur piézo-électrique comprend un stator monté, par exemple par emmanchement à force (chassage) ou par collage, sur un axe étagé qui est situé dans l'axe de rotation dudit moteur. Ce moteur piézo-électrique comporte, par ailleurs, un rotor qui est maintenu en contact axial sur le stator par l'intermédiaire de moyens d'appui. Un transducteur piézo-électrique ayant une forme de disque est disposé sous le stator. Ce transducteur piézo-électrique peut être constitué, par exemple, par une céramique susceptible d'être excitée électriquement pour induire dans le stator un mouvement vibratoire. Des moyens de transmission du mouvement vibratoire auquel est soumis le stator sont ménagés sur le rotor, ces moyens de transmission étant constitués par des lames de flexion déformables élastiquement.

Soumis à une tension d'excitation électrique, l'élément piézo-électrique vibre radialement. La vibration de l'élément piézo-électrique induit dans le stator des contraintes mécaniques sous l'effet desquelles ce dernier va se mettre à vibrer verticalement, de part et d'autre de sa position de repos. La déformation en flexion du stator, et donc le déplacement essentiellement linéaire de chaque point du stator, sont transformés en un déplacement en rotation concomitant du rotor grâce aux lames de flexion déformables élastiquement par l'intermédiaire desquelles le rotor repose par son pourtour extérieur sur le stator. En effet, les lames de flexion, en étant sollicitées par le stator qui vibre axialement, fléchissent et induisent dans le rotor des composantes de vitesse tangentielles à la périphérie de ce dernier.

Le moteur piézo-électrique décrit ci-dessus a pour mérite de pouvoir être miniaturisé, d'être capable de délivrer un couple moteur significatif, et d'être de structure simple pour pouvoir être fabriqué en série à des coûts peu élevés. Malheureusement, ce moteur piézo-électrique n'est apte à tourner que dans un seul sens. Ceci est dû au fait que la transformation du mouvement vibratoire axial du stator en un mouvement de rotation du rotor est assurée par les lames de flexion susmentionnées qui forment avec une droite parallèle à l'axe de rotation du moteur piézo-électrique un angle qui est fixé lors des opérations de fabrication dudit moteur et qui ne peut être modifié lors du fonctionnement de celui-ci. Il est donc impossible de faire tourner le rotor dans le sens opposé. Pour remédier à ce problème, on pourrait envisager de munir le rotor de lames de flexion ayant alternativement un angle d'inclinaison positif ou négatif par rapport à une droite parallèle à l'axe de rotation du moteur. Mais on ignore dans quel mode faire vibrer l'élément piézo-électrique pour n'exciter que les lames de flexion orientées dans un sens à l'exclusion des lames orientées dans l'autre sens et vice versa.

On connaît également par le brevet US 4,918,351 au nom de la société Olympus Optical un moteur piézo-électrique à ondes progressives classique. Ce moteur comprend une pluralité d'éléments piézo-électriques juxtaposés collés sur la surface inférieure d'un élément dont le rôle est d'amplifier le mouvement de déformation desdits éléments piézo-électriques et d'éviter tout contact direct entre ces éléments piézo-électriques et le rotor. Le rotor est en contact avec l'élément amplificateur de mouvement par l'intermédiaire d'une mince couche de friction. L'orientation des moments dipolaires des éléments électrostrictifs est inversée d'un tel élément à celui disposé juste à côté de façon que, en introduisant un déphasage entre les tensions d'excitation desdits éléments électrostrictifs, il soit possible de créer dans l'élément amplificateur une onde de déformation progressive. Pour changer le sens de rotation du moteur, il suffit d'inverser le déphasage entre les tensions d'excitation. Le moteur Olympus comprend également des bras élastiques qui sont fixés à leur base au stator, et qui sont en contact d'appui glissant avec le disque électrostrictif à leur autre extrémité. Ces bras ne jouent aucun rôle dans le mouvement de rotation du moteur et ont pour seul but, en se déformant élastiquement, d'absorber les vibrations générées par le fonctionnement du moteur et d'éviter ainsi que ces vibrations se propagent au stator.

Bien que capable de tourner dans les deux sens, le moteur Olympus à ondes progressives souffre du fait qu'il est difficile de garantir le contact avec la précision nécessaire lors de la fabrication des éléments du moteur. Le moteur Olympus à onde progressive comprend, pour ces raisons, une pièce étampée qui compense les tolérances mécaniques et les variations dues à l'usure entre les surfaces des pièces de contact. La structure du moteur à onde progressive est ainsi assez compliquée et est difficile à miniaturiser à des coûts acceptables.

La présente invention a pour but de remédier aux problèmes de l'art antérieur susmentionnés ainsi qu'à d'autres encore en proposant un moteur piézo-électrique peu coûteux et miniaturisable, susceptible de se déplacer dans les deux sens de rotation.

A cet effet, la présente invention concerne un moteur piézo-électrique du type comprenant :
- un stator;
- un rotor susceptible de se déplacer en rotation dans un plan dit plan de déplacement moyen normal à un axe géométrique de rotation sur lequel le rotor est centré;
- des moyens de couplage pour l'entraînement du rotor disposés entre le stator et ledit rotor;
- des moyens piézo-électriques susceptibles d'être excités électriquement pour imprimer aux moyens de couplage un mouvement vibratoire;
- des moyens de transmission aptes à transmettre le mouvement vibratoire des moyens de couplage au rotor afin d'entraîner ledit rotor en rotation autour de son axe, et
- des moyens de maintien pour appliquer le rotor sur le stator,
caractérisé en ce que les moyens de couplage sont disposés librement autour de l'axe géométrique de rotation sur lequel ils sont centrés, et en ce que les moyens de couplage reposent sur le stator par l'intermédiaire de moyens d'appui conformés pour transformer le mouvement vibratoire des points dans la région de contact entre les moyens de couplage et le rotor en un mouvement sensiblement elliptique avant ou arrière, essentiellement perpendiculairement au plan du rotor.

Grâce à ces caractéristiques, la présente invention procure un moteur piézo-électrique apte à tourner en marche avant ou en marche arrière. Pour atteindre ce but, le moteur piézo-électrique selon l'invention est conformé de façon à ce que les points des moyens de couplage dans la région de contact entre lesdits moyens de couplage et le rotor décrivent une trajectoire sensiblement elliptique, perpendiculairement au plan du rotor, soit dans le sens trigonométrique direct, soit dans le sens inverse, de sorte que ledit rotor peut être entraîné en avant ou en arrière. Le mouvement elliptique se compose d'un mouvement sensiblement circulaire dans le plan des moyens de couplage et d'un mouvement de vibration axiale de ces mêmes moyens de couplage. En effet, si l'on suppose que le mouvement vibratoire des moyens de couplage se trouve dans la phase dans laquelle ceux-ci se déforment axialement vers le bas en leur centre, on constate qu'en raison de la structure des moyens d'appui par lesquels les moyens de couplage reposent sur le stator, la déformation axiale vers le bas desdits moyens de couplage imprime à ces derniers un mouvement de pivotement angulaire. Par ailleurs, en même temps que le centre des moyens de couplage est déformé axialement vers le bas, leur pourtour extérieur peut, au choix, se déformer axialement vers le haut ou vers le bas en fonction de la fréquence du signal d'excitation qui est appliqué aux moyens piézo-électriques. Ainsi, la combinaison du mouvement de pivotement angulaire qui naît de la déformation axiale vers le bas du centre des moyens de couplage et du mouvement d'extension positif ou négatif, c'est-à-dire au-delà ou en deçà de leur position de repos, du pourtour extérieur desdits moyens de couplage, produit un mouvement elliptique dudit pourtour extérieur de ces moyens de couplage qui sont ainsi aptes à entraîner le rotor en rotation. En outre, suivant que le centre et la périphérie des moyens de couplage se déforment en phase, c'est-à-dire qu'ils se déforment tous les deux axialement vers le bas durant une même demi-période du signal d'excitation des moyens piézo-électriques, ou en opposition de phase, c'est-à-dire que le centre des moyens de couplage se déforme en flexion vers le bas tandis que la périphérie desdits moyens de couplage se déplace vers le haut, cela produit une inversion du sens de rotation du rotor.

D'autres caractéristiques et avantages de la présente invention ressortiront plus clairement à la lecture de la description détaillée qui suit d'un exemple de réalisation du moteur piézo-électrique selon l'invention, cet exemple étant donné à titre purement illustratif et non limitatif seulement, en liaison avec les dessins annexés dans lesquels :
- la figure 1 est une vue en coupe d'un moteur piézo-électrique conforme à la présente invention;
- la figure 2 est une vue de dessous du moteur piézo-électrique représenté à la figure 1 avec une suspension des moyens de couplage réalisée différemment;
- la figure 3 est une vue en coupe selon l'axe III-III de la figure 2;
- la figure 4 est une vue en perspective des moyens d'appui par lesquels les moyens de couplage reposent sur le stator;
- la figure 5 est une vue de la tranche des moyens de couplage sur laquelle sont représentées les directions de déplacement axial et circulaire de ces moyens de couplage, et
- la figure 6 est une vue en section des moyens de couplage représentés en traits pleins dans leur position de repos, et en traits mixtes interrompus dans leurs positions extrêmes de déformation lorsque ces moyens de couplage sont excités en vibration par les moyens piézo-électriques.

La présente invention procède de l'idée générale inventive consistant à procurer un moteur piézo-électrique capable de fonctionner en marche avant comme en marche arrière. Pour atteindre ce but, la présente invention enseigne de monter librement des moyens de couplage autour de l'axe géométrique sur lequel il sont centrés, et de faire reposer ces moyens de couplage sur le stator du moteur par l'intermédiaire de moyens d'appui conformés pour transformer le mouvement vibratoire induit dans lesdits moyens de couplage par des moyens piézo-électriques en un mouvement sensiblement elliptique au niveau de la zone de contact entre les moyens de couplage et le rotor, perpendiculairement au plan dans lequel ledit rotor se déplace. En fonction de la fréquence du signal électrique choisie pour exciter les moyens piézo-électriques, les moyens de couplage vibrent selon d'autres modes de résonance et le centre des moyens de couplage et la région de contact entre les moyens de couplage et le rotor se déforment soit en phase, soit en opposition de phase, de sorte que les points de ladite région de contact décrivent une trajectoire elliptique dans le sens trigonométrique direct ou dans le sens inverse, ce qui permet d'entraîner le rotor en marche avant et en marche arrière.

La présente invention va être décrite en liaison avec une pièce d'horlogerie. En effet, le recours à des moteurs piézo-électriques s'avère particulièrement intéressant et avantageux dans le domaine de l'horlogerie, dans la mesure où de tels moteurs sont aptes à fournir des couples élevés. En particulier, les moteurs piézo-électriques sont utilisés pour entraîner des mécanismes indiquant la date encore appelés quantièmes. Le moteur piézo-électrique selon l'invention présente l'avantage supplémentaire de pouvoir fonctionner en marche avant comme en marche arrière, de sorte que, lorsqu'il est employé pour entraîner un mécanisme de quantième, il permet à l'utilisateur d'une montre équipée d'un tel moteur de régler la date en choisissant le sens de défilement (en avant ou en arrière) de l'indicateur de quantième. Une telle caractéristique est intéressante, notamment en ce qui concerne les montres dont le mouvement est alimenté au moyen d'une cellule solaire. On sait, en effet, que seuls l'oscillateur à quartz et le circuit diviseur de fréquence de telles montres continuent de fonctionner dans l'obscurité. Ainsi, lorsque l'utilisateur voudra à nouveau porter sa montre, il choisira, en fonction de la date affichée par ladite montre, le sens de défilement du quantième qui lui permettra d'atteindre au plus vite la date du jour auquel il se trouve.

Il va de soi que l'exemple décrit ci-dessus d'application du moteur piézo-électrique selon l'invention à l'entraînement du mécanisme de quantième d'une pièce d'horlogerie est donné à titre purement illustratif et non limitatif seulement. En effet, le moteur piézo-électrique conforme à la présente invention peut être utilisé dans bien d'autres domaines tels que la robotique, l'ingénierie bio-médicale, voire l'aéronautique, domaines dans lesquels on est toujours à la recherche de moteurs insensibles aux champs magnétiques et capables, malgré un faible encombrement, de fournir un couple significatif à de faibles vitesses de rotation.

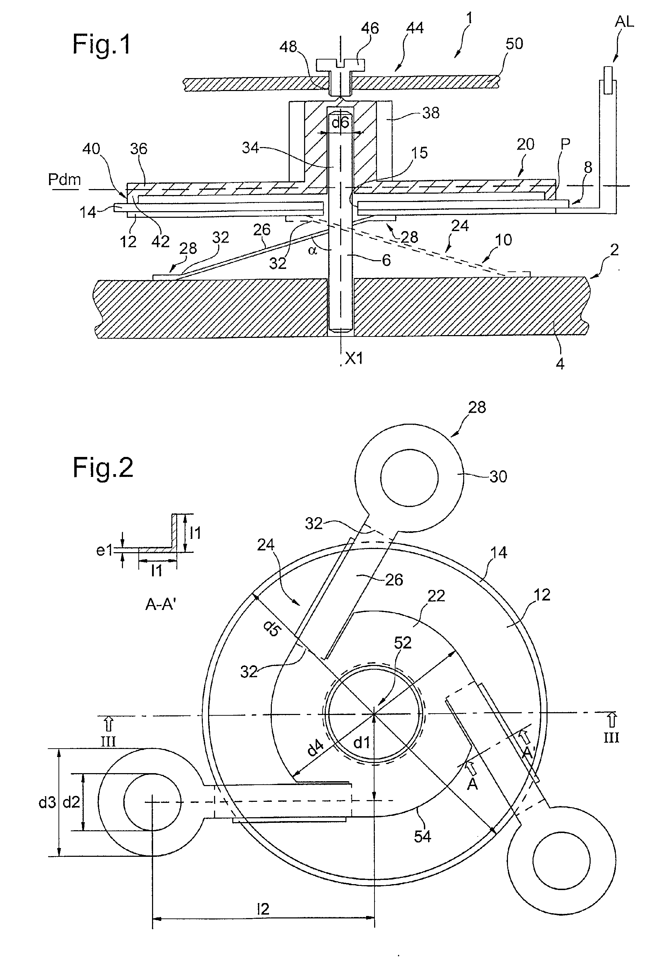

En se référant à la figure 1, on décrira ci-après un mode de réalisation du moteur piézo-électrique selon l'invention, ce moteur étant désigné dans son ensemble par la référence numérique générale 1.

Le moteur 1 comporte un stator 2 qui, dans cet exemple, est constitué par une platine 4 dans laquelle est encastré et maintenu fixement, par exemple par emmanchement à force du type chassage ou par collage, un axe ou goupille 6. L'axe 6 fait saillie du stator 2 en s'étendant perpendiculairement à celui-ci.

Comme on peut le voir sur la figure 1, l'axe 6 est de forme extérieure généralement cylindrique et matérialise un axe géométrique X1 que l'on appellera ci-après axe géométrique de rotation. Le stator 2 ainsi que l'axe 6 peuvent être réalisés en un matériau métallique tel que du laiton ou un alliage d'acier. L'ensemble formé par la platine 4 et la goupille 6 constitue donc une structure fixe formant le stator 2 du moteur piézo-électrique 1 selon l'invention.

Des moyens de couplage 8 sont, contrairement à la pratique, montés non pas fixes, mais disposés libres à la fois en rotation et en translation autour de la goupille 6 par rapport à laquelle ils sont centrés. Ces moyens de couplage 8 reposent sur le stator 2 par des moyens d'appui 10 qui seront décrits en détail ultérieurement. Sur ces moyens de couplage 8, qui sont donc susceptibles de vibrer par rapport au stator 2, sont montés des moyens piézo-électriques 12 constitués d'une céramique piézo-électrique, par exemple du type PZT (mélange d'un zirconate de plomb et d'un titanate de plomb), et d'au moins deux électrodes (non représentées au dessin) qui sont reliées de façon classique à une alimentation électrique AL, représentée ici de façon schématique. Les moyens piézo-électriques 12 forment donc un transducteur qui, en réponse à une excitation électrique de fréquence variable fournie par l'alimentation AL via les électrodes, peut prendre un mouvement vibratoire. Ces phénomènes de piézo-électricité ainsi que la construction et l'agencement de tels transducteurs piézo-électriques dans des moteurs du même type sont bien connus de l'homme du métier et ne seront donc par conséquent pas décrits ici de façon plus détaillée.

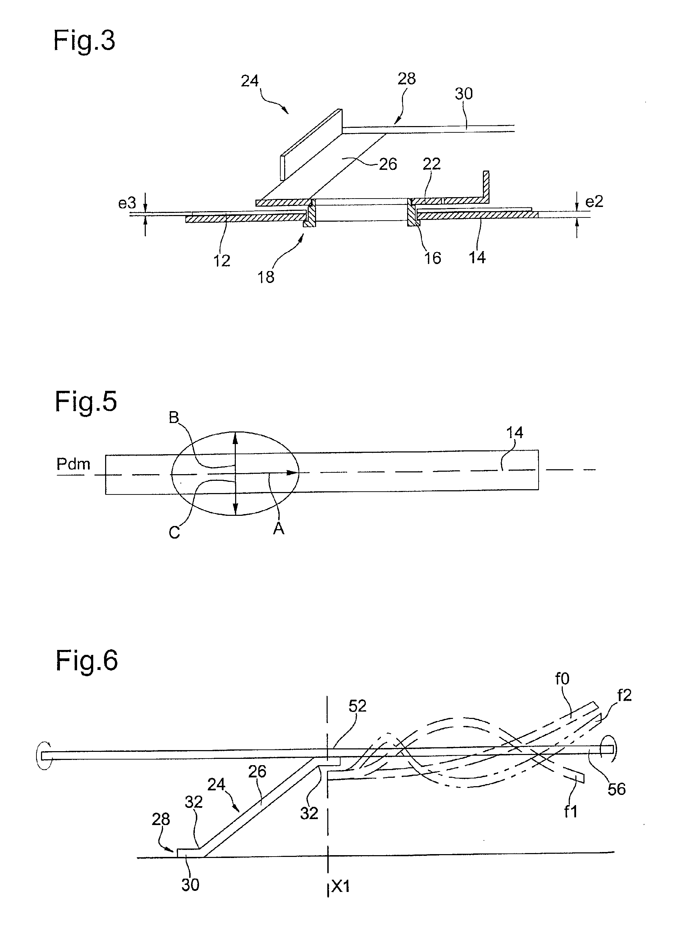

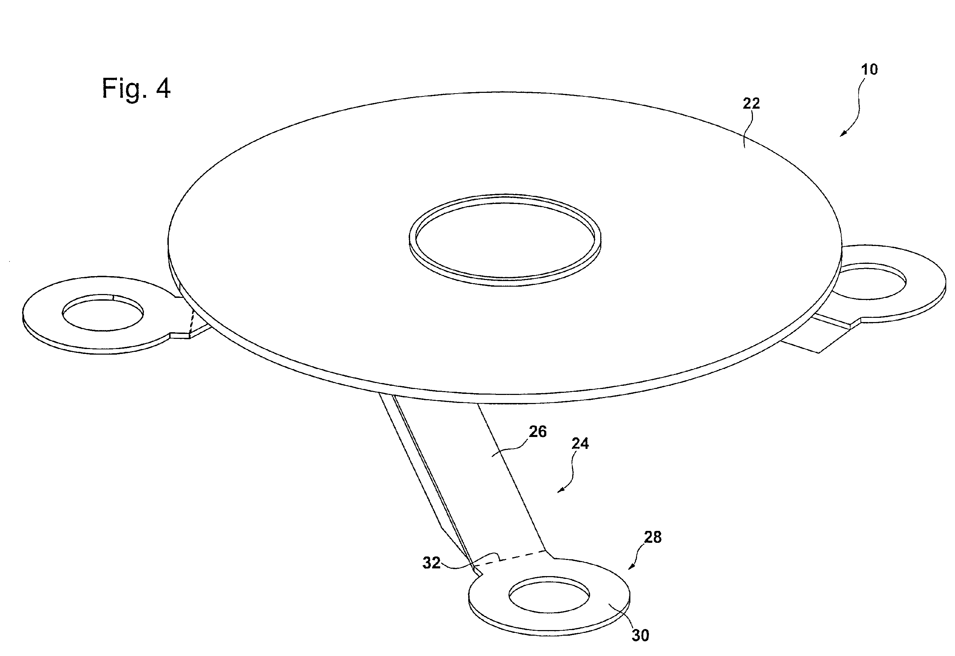

Les moyens de couplage 8 comprennent un disque 14 présentant en son centre un orifice traversant 15 par lequel le disque 14 est engagé librement sur l'axe 6. Le disque 14 qui forme l'ossature des moyens de couplage 8 est fixé, par exemple par soudage laser, en appui axial sur une collerette 16 d'une douille 18 (voir figure 3) typiquement réalisée par décolletage. Il peut être réalisé en un matériau métallique tel que, par exemple, un alliage de cuivre-béryllium, ou encore, par exemple, en un matériau céramique ou plastique.

Les moyens de couplage 8 comportent de plus les moyens d'appui 10 susmentionnés qui peuvent également être fixés par soudage laser à la base de la douille 18. Ces moyens d'appui 10 sont conformés de façon à ce que les points dans la région de contact entre le disque de couplage 14 et le rotor 20 décrivent une trajectoire sensiblement elliptique, perpendiculairement au plan de rotation Pdm dudit rotor 20, soit dans le sens trigonométrique direct, soit dans le sens inverse, de sorte que le rotor 20 peut être entraîné en marche avant ou arrière comme on le verra plus en détail dans la suite de la présente description.

Pour atteindre le but mentionné ci-avant, les moyens d'appui 10 comportent (voir figures 2 et 3) un disque 22 de faible épaisseur, par exemple réalisé en acier ressort, et fixé par tout moyen approprié tel que, notamment par soudage, sur la collerette 16 de la douille 18. Les moyens d'appui 10 comportent de plus des jambes 24 qui sont fixées sur le stator 2. On a représenté sur les figures uniquement trois de ces jambes 24, nombre minimum nécessaire pour définir un plan stable de pivotement du disque de couplage 14, mais on comprendra, bien entendu, qu'un nombre plus important de jambes 24 peut être prévu, le nombre limite étant déterminé, entre autres, par les conditions d'encombrement. Toutefois, si le rotor est guidé comme représenté à la figure 1, le plan du stator est défini par ledit rotor, et dans ce cas deux jambes suffisent.

Chacune des jambes 24 se compose d'une partie rectiligne 26 qui doit être suffisamment rigide. A cet effet, les parties rectilignes 26 peuvent être conformées en éléments profilés de section droite, par exemple en forme de L, comme cela est visible sur la coupe effectuée selon la ligne A-A' de la figure 2. Des parties rectilignes 26 dont la section droite serait en forme de U peuvent également être envisagées. Dans le cas d'une section droite en forme de L, la largeur I1 de chacun des bras du L est approximativement de 0.5 mm et l'épaisseur e1 de ces bras est de l'ordre du dixième de millimètre. Les jambes 24 comportent en outre chacune, à leurs extrémités inférieures, un pied 28 par lequel elles sont fixées rigidement sur le stator 2 du moteur 1. Dans l'exemple représenté au dessin, les pieds 28 se présentent sous la forme d'oeillets 30, c'est-à-dire de petites pièces métalliques évidées de forme ronde qui permettent de fixer lesdits pieds 28 sur le stator 2 au moyen de vis (non représentées). Il va de soi que d'autres moyens de fixation tels que, notamment, le collage ou le soudage, peuvent être envisagés pour rendre les pieds 28 solidaires du stator 2.

Comme représenté sur les figures 2 et 3, les jambes 24 sont faites d'une seule pièce avec le disque 22. Bien entendu, selon une variante, les jambes 24 pourraient être réalisées séparément, et fixées une à une entre le disque de couplage 14 et le stator 2 du moteur piézo-électrique 1 selon l'invention comme cela est illustré à la figure 1 sur laquelle on voit que chaque jambe 24 se termine à ses deux extrémités par un pied 28. Cela complique cependant les opérations de montage.

Les jambes 24 des moyens d'appui 20 s'articulent avec les pieds 28 d'une part, et avec le disque 22 avec lequel elles viennent de matière d'autre part, selon une articulation de type rotule 32. Effectivement, les articulations 32 sont capables de pivoter non seulement autour d'un axe horizontal à la façon d'une charnière, mais également autour d'un axe perpendiculaire au plan défini par le disque de couplage 14, de façon à permettre à ce dernier de pivoter dans son plan horizontal de déplacement tout en s'affaissant ou en s'érigeant verticalement selon la direction de l'axe géométrique de rotation X1 autour duquel ledit disque de couplage 14 est centré.

Le moteur piézo-électrique 1 conforme à la présente invention comporte par ailleurs le rotor 20 susmentionné susceptible de se déplacer en rotation par rapport au stator 2 autour de l'axe géométrique de rotation X1. Plus précisément, le rotor 20 repose en appui axial sur la face supérieure du disque de couplage 14, et est engagé librement par un orifice central 34 sur le pourtour extérieur cylindrique de la goupille 6.

Le rotor 20 comporte dans cet exemple de réalisation un disque 36 de faible épaisseur réalisé en un matériau tel qu'un métal ou du plastique dur. Ce disque 36 forme une structure rigide et porteuse pouvant engrener avec des moyens d'accouplement, non représentés, par exemple d'un mécanisme de quantième. Pour pouvoir engrener avec le mécanisme de quantième, le rotor 20 comporte un pignon 38 qui est fait d'une seule pièce avec le disque 36. Il va toute fois de soi que, selon une variante de réalisation, le pignon 38 pourrait être réalisé sous forme d'une pièce séparée fixée, par exemple par collage, sur le rotor 20.

Le moteur piézo-électrique 1 comporte de plus des moyens 40 de transmission du mouvement conformés pour transmettre au rotor 20 le mouvement vibratoire du disque de couplage 14 et pour permettre le déplacement du rotor 20 en rotation autour de son axe X1. Le rotor 20 est ainsi apte à se déplacer en rotation dans son plan de déplacement moyen Pdm normal à l'axe de rotation X1.

Les moyens 40 de transmission du mouvement sont formés par des plots rigides 42. Comme on le voit mieux sur la figure 1, ces plots 42 sont soit encastrés dans le disque 36 formant la structure porteuse du rotor 20 et maintenus fixement par collage, soit surmoulés avec la matière plastique dure dont est fait le disque 36. Selon une variante, les moyens de transmission 40 pourraient également être formés par un anneau continu qui s'étendrait tout le long de la périphérie du disque 36.

Les plots rigides 42 pour la transmission au rotor 20 du mouvement vibratoire du disque de couplage 14 sont disposés à la périphérie du disque 36. Ils s'étendent perpendiculairement à la surface du disque 14 constituant l'ossature des moyens de couplage 14 et sont, au minimum, au nombre de trois. Bien entendu, un nombre plus élevé de ces plots 42 peut être envisagé, le nombre limite étant donné par des conditions d'encombrement maximal. On remarque que les plots 42, qui sont interposés entre le rotor 20 et le disque de couplage 14, aboutent et reposent directement sur la face avant plane dudit disque de couplage 14 qui est lisse et exempte de tout élément en saillie ou protubérance mais qui présente néanmoins un coefficient de rugosité suffisant pour permettre l'entraînement du rotor. Les plots rigides 42 définissent avec le disque de couplage 14 sur lequel ils s'appuient des points de contact P qui décrivent, comme cela sera décrit par la suite de façon plus détaillée, une trajectoire sensiblement elliptique, soit dans le sens trigonométrique direct, soit dans le sens inverse. Ce déplacement des points de contact P est engendré par le mouvement oscillatoire qui anime le disque de couplage 14 lorsque les moyens piézo-électriques 12 sont excités par un signal d'excitation électrique de fréquence appropriée.

Toujours en se référant à la figure 1, on remarquera que le rotor 20 est sollicité en direction axiale vers le disque de couplage 14 par l'intermédiaire de moyens de maintien 44. Ces moyens qui permettent l'appui axial du rotor 20 sur le disque de couplage 14 sont constitués par une vis 46 montée dans l'axe de la goupille 6 et vissée à travers un trou fileté 48 d'un pont 50 du mouvement d'horlogerie.

Comme on peut le voir notamment sur la figure 2, les jambes 24 des moyens d'appui 10 sont excentrées par rapport au centre 52 du disque de couplage 14, disposées à intervalles de distance réguliers sur un cercle 54 concentrique audit centre 52 du disque de couplage 14. La distance d1 séparant l'axe de symétrie longitudinale des jambes 24 du centre 52 du disque de couplage 14 et l'angle d'inclinaison (α) (voir figure 1) desdites jambes 24 par rapport à une droite parallèle à l'axe de rotation X1 du rotor 20 déterminent la composante circulaire du mouvement elliptique du disque de couplage 14 comme cela va maintenant être décrit en liaison avec les figures 5 et 6.

Conformément à la présente invention, et comme cela est visible sur la figure 5 sur laquelle est représenté le disque de couplage 14 vu en tranche dans la zone de contact entre ledit disque de couplage 14 et le rotor 20, les points P de cette zone de contact décrivent une trajectoire sensiblement elliptique, perpendiculairement au plan de déplacement Pdm du rotor 20, soit dans le sens trigonométrique direct, soit dans le sens inverse. Le rotor 20 peut ainsi être entraîné en avant ou en arrière. Le mouvement elliptique se compose d'un mouvement sensiblement circulaire et d'un mouvement de vibration axiale du disque de couplage 14. En effet, quelle que soit la fréquence du signal électrique choisie pour exciter les moyens piézo-électriques 12, le disque de couplage 14 qui est, rappelons le, disposé libre en rotation et en translation autour de l'axe géométrique X1 sur lequel il est centré, se déforme toujours axialement vers le bas en son centre 52 durant une demi-période du signal électrique d'excitation. Ceci est confirmé par la figure 6 sur laquelle on voit que, que le disque de couplage 14 soit excité selon son mode fondamental f0 ou selon ses modes premier ou deuxième partiels f1 et f2 mieux connus sous leur dénomination anglo-saxonne "overtone mode" ou "partial mode", le centre 52 du disque de couplage 14 se déforme en flexion en deçà de sa position de repos qui est représentée en traits pleins sur la figure 6. Cette déformation est représentée de façon très exagérée et, en réalité, elle ne dépasse pas une amplitude de battement supérieure à quelques micronmètres.

La fréquence propre du disque de couplage 14 varie fortement avec le mode de vibration. Ceci permet de sélectionner le mode de vibration voulu en excitant les moyens piézo-électriques 12 avec une tension de fréquence correspondant au mode de vibration voulu. On notera que l'on sélectionne uniquement les modes de vibration qui font apparaître des cercles nodaux axisymétriques mais pas de diamètre nodal, de sorte que tous les points situés sur un même cercle sont animés d'un même mouvement. On pourrait utiliser des modes avec des diamètres nodaux et n'intégrer les mouvements que sur une partie de la périphérie si on arrive à fixer convenablement la position angulaire du ou des diamètres nodaux à l'aides de trous ou de masselottes qui rompent la symétrie. Lorsque le disque de couplage 14 est excité selon son mode fondamental f0, la déformation due aux contraintes de flexion générées dans le disque de couplage 14 grâce à son mouvement vibratoire induit par lesdits moyens piézo-électriques 12 donne audit disque de couplage 14 une forme de cuvette. Le mouvement vibratoire des moyens piézo-électriques 12 et la déformation résultante du disque de couplage 14 sont tous deux de type axisymétriques. Autrement dit, tous les points du disque de couplage 14 situés sur un même cercle centré autour de l'axe géométrique X1 subiront simultanément la même élongation.

En raison de la structure des moyens d'appui 10 par lesquels le disque de couplage 14 est soutenu par le stator 2, la déformation axiale vers le bas dudit disque de couplage 14 se transforme en un mouvement de pivotement angulaire (voir flèche A, figure 5) des points de contact P entre le disque de couplage 14 et le rotor 20, tangentiellement au plan de déplacement Pdm dudit rotor 20.

Par ailleurs, en même temps que le centre 52 du disque de couplage 14 est déformé axialement vers le bas, son pourtour extérieur 56 dans la zone de contact avec le rotor 20 peut, au choix, se déformer axialement vers le haut (voir flèche B, figure 5) ou vers le bas (voir flèche C, figure 5), en fonction du mode de vibration du disque de couplage 14. Ainsi, la combinaison du mouvement de pivotement angulaire qui naît de la déformation axiale vers le bas du centre 52 du disque de couplage 14, et du mouvement d'extension positif ou négatif, c'est-à-dire au-delà ou en deçà de sa position de repos, du pourtour extérieur 56 dudit disque de couplage 14, produit un mouvement elliptique dudit pourtour extérieur 56 de ce disque de couplage 14 qui est ainsi apte à entraîner le rotor 20 en rotation. En outre, suivant que le centre 52 et la périphérie 56 du disque de couplage 14 se déforment en phase, c'est-à-dire qu'ils se déforment tous les deux axialement vers le bas durant une même alternance du signal électrique d'excitation des moyens piézo-électriques 12, ou en opposition de phase, c'est-à-dire que le centre 52 du disque de couplage 14 se déforme en flexion vers le bas tandis que la périphérie 56 dudit disque de couplage 14 se déplace vers le haut, cela produit une inversion du sens de rotation du rotor 20.

Les caractéristiques susmentionnées ressortent clairement de la figure 6 sur laquelle on voit notamment que lorsque le disque de couplage 14 est excité dans son mode fondamental f0, le centre 52 et la périphérie 56 du disque de couplage 14 se déforment axialement en opposition de phase. Autrement dit, le centre 52 du disque de couplage 14 se déforme en flexion vers le bas, tandis que sa périphérie 56 présente une déformation en flexion vers le haut. Grâce à ce mode de vibration du disque de couplage 14, les points de contact P entre ledit disque de couplage 14 et le rotor 20 s'animent d'un mouvement elliptique qui permet d'entraîner ledit rotor 20 dans un sens donné, par exemple en marche avant.

Lorsqu'on augmente progressivement la fréquence d'excitation des moyens piézo-électriques 12 afin de passer du mode d'excitation fondamental f0 au mode d'excitation premier partiel f1 du disque de couplage 14, on constate que le centre 52 et la périphérie 56 du disque de couplage 14 vibrent cette fois-ci en phase, autrement dit qu'ils se déforment simultanément en flexion vers le bas lors d'une même alternance du signal électrique d'excitation desdits moyens piézo-électriques 12. Dans ce second mode de vibration, les points P de la zone de contact entre le disque de couplage 14 et le rotor 20 décrivent à nouveau une trajectoire elliptique, mais dans le sens opposé à ci-dessus, ce qui permet d'entraîner cette fois-ci ledit rotor 20 en marche arrière. On remarquera que dans son mode d'excitation premier partiel f1, le disque de couplage 14 présente un passage par une valeur d'amplitude nulle. Le mode vibratoire f1 fait donc apparaître un cercle nodal, autrement dit un noeud de vibration, dans ledit disque de couplage 14, ce qui s'explique par le fait que le centre de gravité du disque de couplage 14 doit être conservé lorsque ce dernier produit un mouvement vibratoire et se déforme.

Lorsqu'on continue d'augmenter la fréquence d'excitation des moyens piézo-électriques 12 afin de faire passer le disque de couplage 14 de son mode d'excitation premier partiel f1 à son mode d'excitation deuxième partiel f2, on constate que le centre 52 et la périphérie 56 dudit disque de couplage 14 vibrent à nouveau en opposition de phase, c'est-à-dire que ledit centre 52 se déforme en flexion vers le bas en même temps que ladite périphérie 56 présente une déformation en flexion vers le haut. Dans ce troisième mode de vibration, les points P de la zone de contact entre le disque de couplage 14 et le rotor 20 décrivent toujours une trajectoire elliptique, mais en sens inverse à celui correspondant au mode premier partiel f1. On peut donc à nouveau inverser le sens de marche du moteur piézo-électrique 1 selon la présente invention. On remarquera que, dans son mode d'excitation deuxième partiel f2, le disque de couplage 14 présente deux passages par des valeurs d'amplitude nulle. Le mode de vibration f2 fait donc apparaître deux cercles nodaux, autrement dit deux noeuds de vibration, dans ledit disque de couplage 14.

Comme on l'aura compris de ce qui précède, en faisant passer le mode d'excitation du disque de couplage 14 de son mode fondamental f0 à son mode premier partiel f1, puis deuxième partiel f2, on inverse à chaque fois le sens de rotation du moteur piézo-électrique 1. Bien entendu, on pourra se limiter, pour inverser le sens de rotation dudit moteur 1, à faire varier la fréquence du signal électrique d'excitation entre les deux seules valeurs f0 et f1, faisant ainsi passer le disque de couplage 14 de son mode de vibration fondamental à son mode de vibration premier partiel et inversement.

Dans le paragraphe suivant, on fournit des indications relatives aux dimensions géométriques des différents éléments constitutifs du moteur piézo-électrique 1 conforme à la présente invention.

On rappellera pour mémoire que, dans le cas où les jambes 24 des moyens d'appui 10 sont conformées selon des éléments profilés de section droite en forme de L, la largeur I1 de chacun des bras du L est approximativement de 0,5 mm, et l'épaisseur e1 de ces bras est de l'ordre du dixième de millimètre. La longueur I2 de chacune des jambes 24 prise à partir du centre des oeillets 30 constituant les pieds 28 desdites jambes 24 est de 3,3 mm. Le diamètre d2 des orifices des oeillets 30 est de 0,8 mm, et le diamètre extérieur d2 desdits oeillets est de 1,5 mm. La distance d3 séparant l'axe de symétrie longitudinale des jambes 24 du centre du disque de couplage 14 est de 1,25 mm, et le diamètre d4 du disque 22 avec lequel lesdites jambes 24 viennent de matière est de 3,0 mm. Le diamètre d5 du disque de couplage 14 est de 5,0 mm et son épaisseur e2 est de 0,2 mm. L'épaisseur e3 du disque de matériau céramique piézo-électrique est de 0,1 mm. Le diamètre d6 de la goupille 6 est de 1,2 mm. Enfin, l'angle d'inclinaison α que forment les jambes 24 avec une droite parallèle à l'axe de rotation X1 du rotor 20 est typiquement compris entre 10 et 30°.

Il va de soi que la présente invention n'est pas limitée au mode de réalisation qui vient d'être décrit et que diverses modifications et variantes simples peuvent être envisagées sans sortir du cadre de la présente invention. En particulier, le disque 14 qui forme l'ossature des moyens de couplage 14 et les moyens piézo-électriques 12 peuvent être réalisés d'une seule pièce, entièrement en céramique PZT.

La présente invention fournit ainsi un moteur piézo-électrique dont le principe de fonctionnement repose sur le fait que, sous l'effet de l'application, à des moyens piézo-électriques, d'une tension alternative dont la fréquence d'oscillation est choisie de façon à coïncider avec l'une des fréquences propres du disque de couplage, le centre et le bord dudit disque de couplage se déforment axialement en phase ou en opposition de phase. En même temps qu'il se déforme axialement, le disque est forcé à pivoter par les jambes d'appui et entraîne le rotor en rotation. A la fin d'une période du signal électrique d'excitation, le disque s'abaisse et est rappelé par les jambes d'appui dans sa position initiale. Ce mouvement de descente et de recul du disque de couplage s'opère en l'absence quasi totale de toute force de frottement entre celui-ci et le rotor, de sorte que tout risque de recul dudit rotor est évité. On comprendra que selon que le centre et le bord du disque de couplage vibrent en phase ou en opposition de phase, le rotor du moteur électrostrictif sera entraîné en rotation avant ou arrière. Il suffit donc de modifier la fréquence de la tension d'excitation pour faire vibrer le disque de couplage dans l'un ou l'autre de ses modes propres et décider ainsi du sens de rotation du moteur selon l'invention.

## Revendications

1. Moteur piézo-électrique du type comprenant :
- un stator (2);
- un rotor (20) susceptible de se déplacer en rotation dans un plan (Pdm) dit plan de déplacement moyen normal à l'axe géométrique de rotation (X1) sur lequel le rotor (20) est centré;
- des moyens de couplage (8) pour l'entraînement du rotor (20) disposés entre le stator (2) et ledit rotor (20);
- des moyens piézo-électriques (12) susceptibles d'être excités électriquement pour imprimer aux moyens de couplage (8) un mouvement vibratoire;
- des moyens de transmission (40) aptes à transmettre le mouvement vibratoire des moyens de couplage (8) au rotor (20) afin d'entraîner ledit rotor (20) en rotation autour de son axe (X1), et
- des moyens de maintien (44) pour appliquer le rotor (20) sur les moyens de couplage (8),
**caractérisé en ce que** les moyens de couplage (8) sont disposés librement autour de l'axe géométrique de rotation (X1) sur lequel ils sont centrés, et **en ce que** les moyens de couplage (8) reposent sur le stator (2) par l'intermédiaire de moyens d'appui (10) conformés pour transformer le mouvement vibratoire des points (P) dans la région de contact entre les moyens de couplage (8) et le rotor (20) en un mouvement sensiblement elliptique avant ou arrière, essentiellement perpendiculairement au plan du rotor (20).

2. Moteur piézo-électrique selon la revendication 1, **caractérisé en ce que** les moyens d'appui (10) s'articulent avec le stator (2) d'une part, et avec les moyens de couplage (8) d'autre part, selon une articulation (32) de type rotule.

3. Moteur piézo-électrique selon la revendication 2, **caractérisé en ce que** les moyens d'appui (10) sont excentrés par rapport au centre (52) des moyens de couplage (8), et forment un angle d'inclinaison (α) par rapport à une droite parallèle à l'axe géométrique de rotation (X1).

4. Moteur piézo-électrique selon l'une quelconque des revendications 1 à 3, **caractérisé en ce que** les moyens d'appui (10) comportent au moins deux jambes rigides (24) qui sont fixées sur le stator (2).

5. Moteur piézo-électrique selon la revendication 4, **caractérisé en ce que** chaque jambe (24) se compose d'une partie rectiligne (26) conformée en élément profilé.

6. Moteur piézo-électrique selon la revendication 5, **caractérisé en ce que** l'élément profilé présente une section droite en forme de L ou de U.

7. Moteur piézo-électrique selon l'une quelconque des revendications 4 à 6, **caractérisé en ce que** les jambes (24) comportent chacune, à leur extrémité inférieure, un pied (28) par lequel elles sont fixées sur le stator (2) du moteur (1), lesdites jambes (24) étant faites d'une seule pièce à leur extrémité supérieure avec un disque (22) fixé sur les moyens piézo-électriques (12).

8. Moteur piézo-électrique selon la revendication 7, **caractérisé en ce que** les pieds (28) sont conformés en oeillets (30) qui permettent de fixer lesdits pieds (28) sur le stator (2) au moyen de vis.

9. Moteur piézo-électrique selon la revendication 7, **caractérisé en ce que** les pieds (28) sont collés ou soudés sur le stator (2).

10. Moteur piézo-électrique selon l'une quelconque des revendications 1 à 9, **caractérisé en ce que** l'ossature des moyens de couplage (8) est formée par un disque (14) présentant en son centre un orifice traversant (16) par lequel il est disposé librement autour de l'axe géométrique de rotation (X1), les moyens piézo-électriques (12) étant montés sur ce disque (14).

11. Moteur piézo-électrique selon la 10, **caractérisé en ce que** le rotor (20) comporte un disque (36) qui forme une structure rigide et porteuse pouvant engrener avec des moyens d'accouplement.

12. Moteur piézo-électrique selon la revendication 11, **caractérisé en ce que**, pour pouvoir engrener avec les moyens d'accouplement, le disque (36) comporte un pignon (38) qui peut être fait d'une seule pièce avec ledit disque (36).

13. Moteur piézo-électrique selon l'une quelconque des revendications 11 ou 12, **caractérisé en ce que** les moyens de transmission (40) sont formés par un anneau continu ou par des plots rigides (42) disposés à la périphérie du disque (36) et qui sont interposés entre le disque de couplage (14) et le rotor (20).

14. Moteur piézo-électrique selon la revendication 13, **caractérisé en ce que** les plots (42) s'étendent perpendiculairement à la surface du disque (36) et aboutent directement sur la face avant plane du disque de couplage (14) qui est lisse et exempt de tout élément en saillie ou protubérance.

15. Moteur piézo-électrique selon l'une quelconque des revendications 13 ou 14, **caractérisé en ce que** les plots (42) sont soit encastrés dans le disque (36) formant la surface porteuse du rotor (20), soit surmoulés avec le même matériau que celui dont est fait ledit disque (36).

16. Moteur piézo-électrique selon l'une quelconque des revendications 10 à 15, **caractérisé en ce que** le rotor (20) est sollicité en direction axiale vers le disque de couplage (14) par l'intermédiaire de moyens de maintien (44).

17. Moteur piézo-électrique selon la revendication 16, **caractérisé en ce que** les moyens de maintien (44) qui permettent l'appui axial du rotor (20) sur le disque de couplage (14) sont constitués par une vis (46).
